# EUROPEAN PATENT SPECIFICATION

(11) **EP 4 289 609 B1**
(45) Date of publication and mention of the grant of the patent: **29.04.2026**
(21) Application number: 23178629.4
(22) Date of filing: 12.06.2023
(51) Int. Cl.: B29C 70/88, B29B 11/16, B29C 35/02, B29C 49/64, B64D 15/12, H05B 3/34, B64D 29/00, F01D 21/04, F02C 7/04, F02C 7/047, H05B 3/26, B29C 35/08, B64D 33/02, B64C 7/02, B64D 45/02

(54) **HEATING THERMOPLASTIC MATERIAL USING ELECTRIC HEATER(S) FOR THERMAL ANTI-ICING SYSTEM**
ERWÄRMEN VON THERMOPLASTISCHEM MATERIAL UNTER VERWENDUNG VON ELEKTRISCHEN HEIZERN FÜR THERMISCHES FROSTSCHUTZSYSTEM
CHAUFFAGE DE MATÉRIAU THERMOPLASTIQUE UTILISANT UN OU DES DISPOSITIFS DE CHAUFFAGE ÉLECTRIQUE POUR SYSTÈME D'ANTIGIVRAGE THERMIQUE

(30) Priority: 10.06.2022 US 202263351138 P
(43) Date of publication of application: 13.12.2023
(73) Proprietor: Rohr, Inc., Chula Vista, CA 91910-2098 (US)
(72) Inventor: DAVIS, Jennifer, Carlsbad, 92009 (US)
(74) Representative: Dehns

(56) References cited:
- EP-A1- 2 607 075
- EP-A1- 3 332 952
- EP-A1- 4 167 683
- GB-A- 2 310 822
- US-A1- 2009 107 620
- US-A1- 2010 155 538
- US-A1- 2019 322 375

## Description

### BACKGROUND

### 1. Technical Field

This disclosure relates generally to an aircraft and, more particularly, to forming a composite component for the aircraft.

### 2. Background Information

An aircraft may include various thermoplastic composite components. Various methods are known in the art for forming such composite aircraft components. While these known formation methods have various advantages, there is still room in the art for improvement. There is a need in the art, for example, for methods for forming thermoplastic composite aircraft components using simpler, less expensive consolidation setups.

US 2009/107620 A1 discloses a prior art manufacturing method for composite material structural component for aircraft and its structural component.

EP 3 332 952 A1 discloses a prior art method for reducing CNT resistivity by aligning CNT particles in films

EP 2 607 075 A1 discloses a prior art sandwich laminate and manufacturing method.

US 2019/322375 A1 discloses a prior art composite aerostructure with integrated heating element.

US 2010/155538 A1 discloses a prior art anti-icing system and method for preventing ice accumulation.

GB 2 310 822 A discloses a prior art method of moulding a structure from thermoplastics material

EP 4 167 683 A1 discloses a prior art integrated ice protection system.

### SUMMARY OF THE DISCLOSURE

From one aspect of the present disclosure, there is provided a method as recited in claim 1.

Features of embodiments are set forth in the dependent claims.

The foregoing features and the operation of the invention will become more apparent in light of the following description and the accompanying drawings.

### BRIEF DESCRIPTION OF THE DRAWINGS

FIG. 1 is a schematic illustration of an assembly for an aircraft with a composite aircraft component and a thermal anti-icing system.
FIG. 2 is a perspective illustration of the aircraft.
FIGS. 3A-C are partial schematic sectional illustrations of the aircraft component with various different layer configurations.
FIGS. 4A and 4B are partial schematic illustrations of an electric heater with various heating element arrangements.
FIG. 5 is a flow diagram of a method for forming the aircraft component.
FIGS. 6A-C are partial schematic sectional illustrations of a composite preform arranged with tooling.
FIG. 7 is a schematic illustration of the composite preform pressed between the tooling and a vacuum bag during consolidation.
FIG. 8 is a schematic illustration of the aircraft component / the composite preform with multiple electric heaters.
FIG. 9 is a schematic illustration of the aircraft component / the composite preform with one or more internal sensors.
FIGS. 10A-C are schematic illustrations depicting repair of the aircraft component.
FIG. 11 illustrates an alternative joint configuration between members of the aircraft component.
FIG. 12 illustrates the aircraft component / the composite preform between the tooling and the vacuum bag, where the component members are bonded together with thermoplastic bonding material.
FIG. 13 is a partial side sectional illustration of an inlet structure of a nacelle for an aircraft propulsion system.

### DETAILED DESCRIPTION

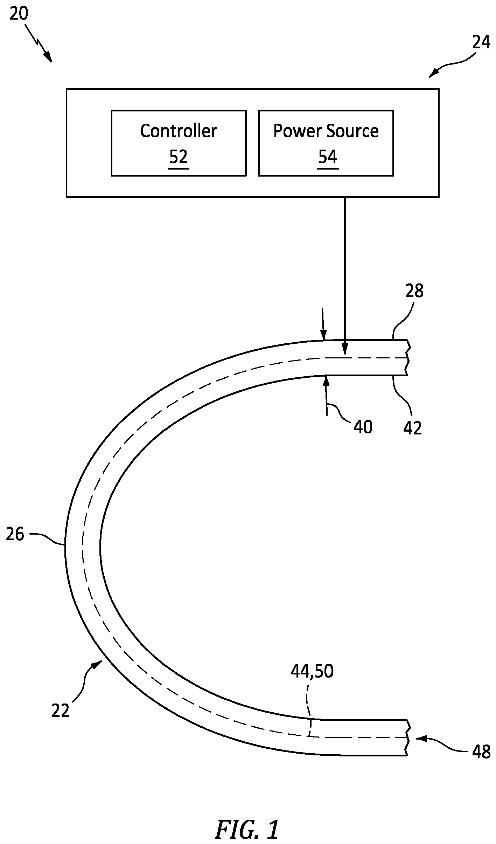

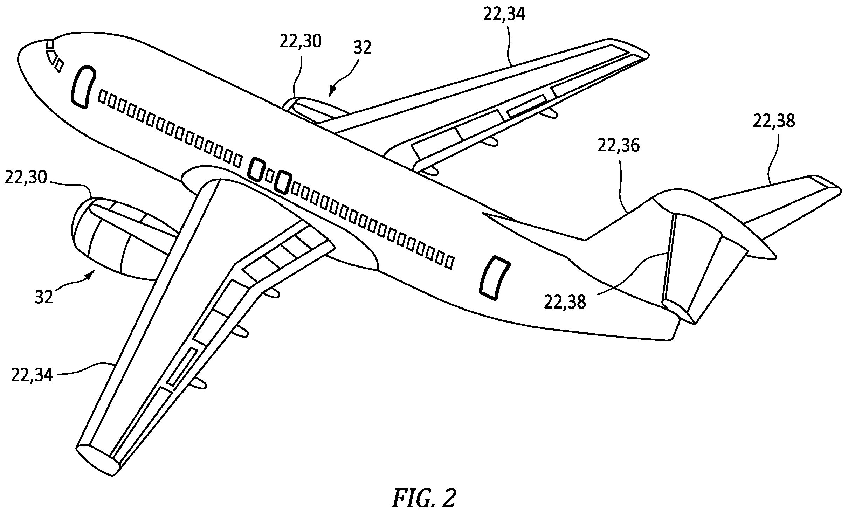

FIG. 1 illustrates an assembly 20 for an aircraft. The aircraft may be configured as an airplane, a helicopter, a drone (e.g., an unmanned aerial vehicle (UAV)), a spacecraft or any other manned or unmanned aerial vehicle. However, for ease of description, the aircraft is described below and illustrated in FIG. 2 as the airplane. The aircraft assembly 20 of FIG. 1 includes a composite aircraft component 22 and a thermal anti-icing system 24.

The aircraft component 22 may be configured as any component of the aircraft with a leading edge 26 and/or at least one aerodynamic exterior surface 28. For example, referring to FIG. 2, the aircraft component 22 may be configured as or included as part of an inlet structure 30 of nacelle for an aircraft propulsion system 32; e.g., an inlet structure noselip. The aircraft component 22 may alternatively be configured as or included as part of an airfoil such as, but not limited to, a wing 34 for the aircraft, a vertical stabilizer 36 for the aircraft, or a horizonal stabilizer 38 for the aircraft. Another example of the airfoil is an inlet guide vane for the aircraft propulsion system 32. The aircraft component 22, however, is not limited to the foregoing exemplary component configurations.

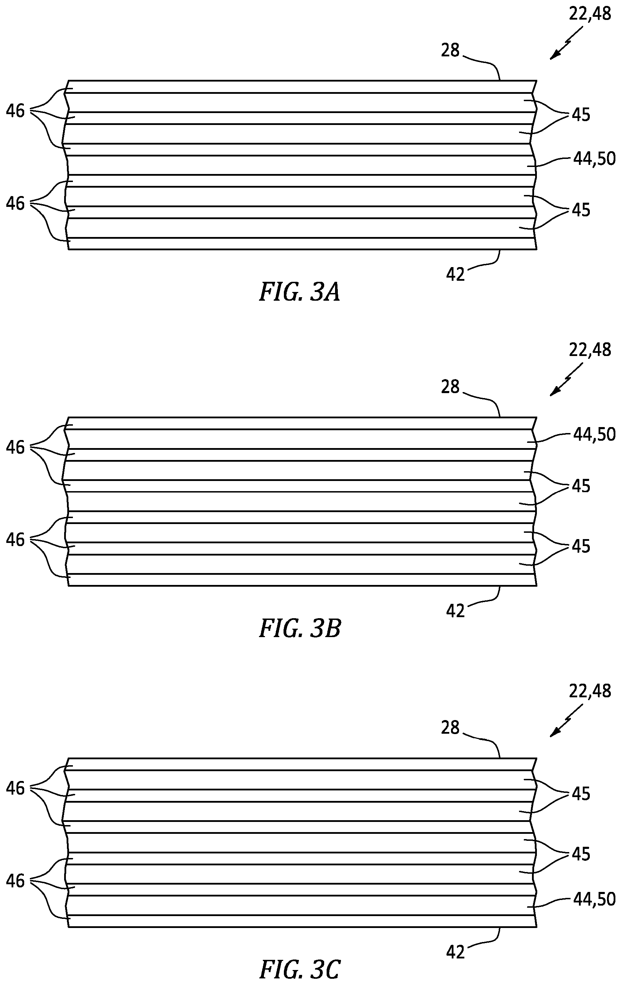

The aircraft component 22 of FIG. 1 extends longitudinally (e.g., axially along an axial centerline and/or lengthwise along an airfoil camber line) to the component leading edge 26. The aircraft component 22 has a thickness 40 that extends laterally between and to an interior surface 42 of the aircraft component 22 and the component exterior surface 28. The aircraft component 22 of FIGS. 3A-C includes at least one electric heater 44, fiber-reinforcement 45 and thermoplastic material 46. The electric heater 44 and the fiber-reinforcement 45 are embedded within the thermoplastic material 46, where the component elements 44-46 collectively form a body 48 (e.g., a skin, a wall, etc.) of the aircraft component 22.

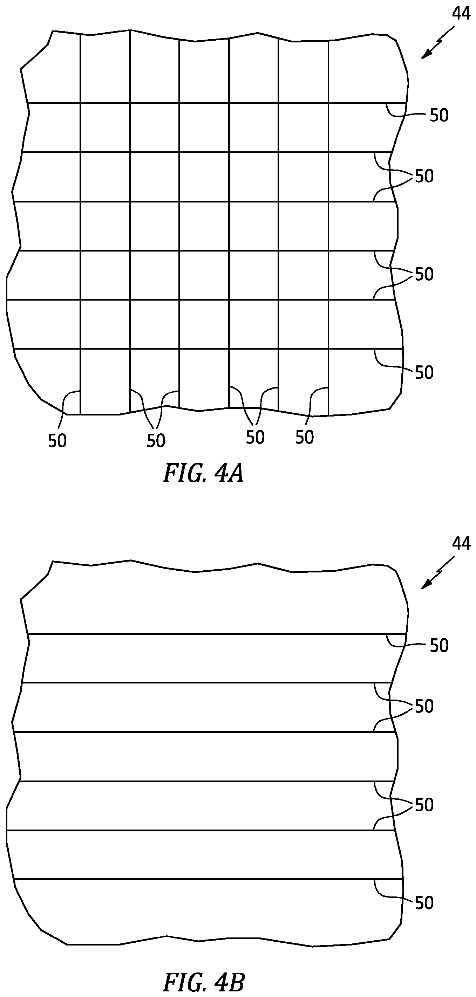

Referring to FIGS. 4A and 4B, the electric heater 44 includes one or more electric heating elements 50 arranged in a grid (e.g., see FIG. 4A), an array (e.g., see FIG. 4B) or any other arrangement. The heating elements 50 may be electrically interconnected to provide a single heating zone across / along the aircraft component 22 and its elements 26 and 28 (see FIG. 1). Alternatively, the heating elements 50 may be configured to provide multiple discrete heating zones across / along the aircraft component 22 and its elements 26 and 28 (see FIG. 1). Each of the heating elements 50 may be configured as an electric carbon nanotube heater. One or more or all of the heating elements 50, however, may alternatively be configured as another type of electrically resistive heating element such as a resistive metal heating wire.

Referring to FIGS. 3A-C, the electric heater 44 and its heating elements 50 are thermally coupled with the component exterior surface 28 through at least the thermoplastic material 46. Referring to FIG. 3A, the electric heater 44 and its heating elements 50 may be arranged (e.g., sandwiched) laterally between multiple layers of the fiber-reinforcement 45 and/or the thermoplastic material 46. The electric heater 44 may thereby be disposed intermediately (e.g., midway) between the component interior surface 42 and the component exterior surface 28. Alternatively, referring to FIG. 3B, the electric heater 44 and its heating elements 50 may be arranged adjacent (or otherwise at) the component exterior surface 28. Still alternatively, referring to FIG. 3C, the electric heater 44 and its heating elements 50 may be arranged adjacent (or otherwise at) the component interior surface 42. The heating elements 50, of course, may also be located at multiple different lateral locations within the component body 48 between the component interior surface 42 and the component exterior surface 28 to provide a multi-layer heater arrangement.

The fiber-reinforcement 45 may be arranged into the one or more reinforcement layers. Each layer of the fiber-reinforcement 45 includes one or more long strand, short strand and/or chopped fibers. Prior to consolidation of the aircraft component 22, the fibers in each reinforcement layer may be woven into a weave or otherwise arranged together to provide a fiber-reinforcement cloth or mat. Examples of the fiber-reinforcement 45 include, but are not limited to, fiberglass material, carbon fiber material and aramid (e.g., Kevlar^{®}) material.

The thermoplastic material 46 provides a thermoplastic matrix into which the electric heater 44 and the fiber-reinforcement 45 are disposed; e.g., embedded, encapsulated, etc. Examples of the thermoplastic material 46 include, but are not limited to, polyether ether ketone (PEEK), and polyetherimide (PEI).

Referring to FIG. 1, the thermal anti-icing system 24 includes the at least one electric heater 44 that is part of and/or embedded within the aircraft component 22. The thermal anti-icing system 24 also include a controller 52 and an electrical power source 54; e.g., one or more batteries, a generator, etc. This thermal anti-icing system 24 is configured to melt and/or prevent ice accumulation on the component exterior surface 28, for example, at (e.g., on, adjacent or proximate) and along the component leading edge 26. The controller 52, for example, may signal the power source 54 (or a switch and/or other regulator between the power source 54 and the electric heater 44) to provide electricity to the electric heater 44. The electricity energizers the electric heater 44 and its heating elements 50, and the electric heater 44 generates heat energy. Referring to FIGS. 3A-C, the heat energy transfers (e.g., conducts) through at least the thermoplastic material 46 towards (e.g., to) the component exterior surface 28 thereby heating the component exterior surface 28 to an elevated temperature.

The elevated temperature may be selected to be warm enough to melt any ice accumulating on the component exterior surface 28 and/or prevent accumulation of the ice on the component exterior surface 28, while cool enough so as not to damage the aircraft component 22 or any surrounding components and/or needlessly expend energy. In particular, the elevated temperature is selected to be less than a melting temperature of the thermoplastic material 46 as well as less than a softening temperature of the thermoplastic material 46. The term "softening" may describe a temperature at which a thermoplastic material becomes soft and permanently deformable; e.g., pliable, malleable, manipulatable, etc. For example, when the thermoplastic material 46 is heated to a temperature above its softening temperature (but below its melting temperature), the thermoplastic material 46 may be soft enough to lose its previous shape due to gravitational sagging and/or other forces. By contrast, when the thermoplastic material 46 is heated to a temperature below its softening temperature, the thermoplastic material 46 may remain stiff and retain its form.

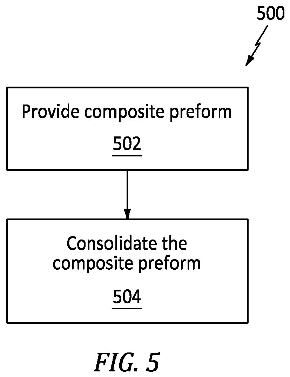

FIG. 5 is a flow diagram of a method 500 for forming a composite aircraft component with at least one internal electric heater. For ease of description, the method 500 is described below with respect to forming the aircraft component 22. The formation method 500 of the present disclosure, however, is not limited to such an exemplary aircraft component.

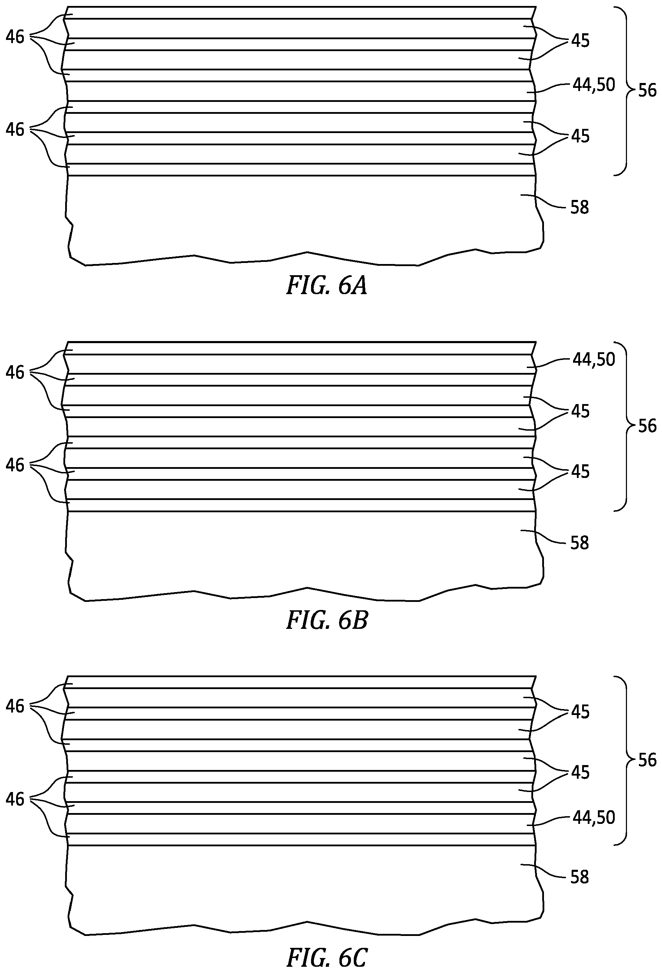

In step 502, a composite preform 56 of the aircraft component 22 is provided. This composite preform 56 may generally have the same shape and dimensions as the aircraft component 22 being formed. Referring to FIGS. 6A-C, the composite preform 56 includes the at least one electric heater 44 and the fiber-reinforcement 45. The composite preform 56 may also include the thermoplastic material 46. The fiber-reinforcement 45 and at least some or all of the thermoplastic material 46, for example, may be provided together as one or more layers (e.g., sheets) of thermoplastic prepreg. The term "thermoplastic prepreg" may describe herein a sheet of fiber-reinforcement that is pre-impregnated with thermoplastic material. To form the composite preform 56, the electric heater 44 may be laid up with the thermoplastic prepreg layers against tooling 58; e.g., a die or other form. The electric heater 44 of FIG. 6A is laid up between the thermoplastic prepreg layers. The electric heater 44 of FIGS. 6B and 6C is laid up to a respective side of the thermoplastic prepreg layers.

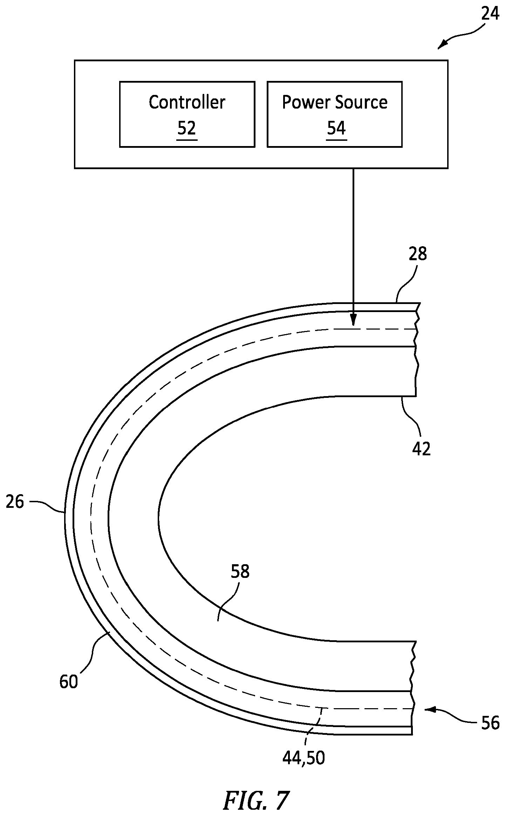

Referring to FIG. 7, the composite preform 56 may be pre-shaped to conform to the tooling 58. Alternatively, the composite preform 56 and its various thermoplastic prepreg layers may be shaped to conform to the tooling 58 by heating the thermoplastic material 46 to a temperature above its softening temperature, but below its melting temperature. This heating may be performed using the electric heater 44 internal to the composite preform 56. The heating, however, may also or alternatively be heated using a heater external to the composite preform 56; although, preferably such an external heating source is not required.

The thermoplastic material 46 of FIGS. 6A-C is included with the fiber-reinforcement 45 in the thermoplastic prepreg layers. Of course, various other techniques are known in the art for delivering thermoplastic material to a preform, and the present disclosure is not limited to any particular ones thereof.

In step 504, the composite preform 56 is consolidated to provide the aircraft component 22. During this consolidation, the composite preform 56 may be subjected to pressure and/or heat to bring together the preform elements 44-46 and then cure the thermoplastic material 46.

Referring to FIG. 7, pressure may be applied to the composite preform 56 using a vacuum bag 60 and the tooling 58. The composite preform 56 of FIG. 7, for example, is disposed between the vacuum bag 60 and the tooling 58 such that the vacuum bag 60 pushes the composite preform 56 against the tooling 58. Alternatively, the composite preform 56 may be pressed between opposing sets of tooling; e.g., an interior die and an exterior die. Of course, various other methods are known in the art for applying pressure to a preform, and the present disclosure is not limited to any particular ones thereof.

To heat the composite preform 56 and, more particularly, the thermoplastic material 46 within the composite preform 56 (see FIGS. 6A-C), at least (or only) the electric heater 44 is energized; e.g., turned on. This electric heater 44 may be energized by the thermal anti-icing system elements 52 and 54, or other similar elements dedicated to component forming, for example. The electric heater 44 and its heating elements 50 thereby produce heat energy and heat up the surrounding material including the thermoplastic material 46 (see FIGS. 6A-C). The heat produced by the electric heater 44 and its heating elements 50 during this consolidation step 504 may be enough (or more than enough) to elevate the thermoplastic material 46 in the thermoplastic prepreg to or above its melting temperature. Of course, in other embodiments, additional heat may also be input from an external heating source (not shown); although, preferably such an external heating source is not required.

It should be noted, the heat energy generated by the electric heater 44 and its heating elements 50 during aircraft operation for thermal anti-icing may be (e.g., significantly) less than that during the consolidation step 504 so as to prevent thermal degradation of one or more other nearby aircraft components as well as prevent excess expenditure of energy as discussed above. For example, during the consolidation, the electric heater 44 may be heated to a relatively high consolidation temperature whereas the electric heater 44 may be heated to a relatively low anti-icing temperature during aircraft operation. The consolidation temperature, of course, may vary depending upon the specific thermoplastic material included in the aircraft component 22.

By using the integral electric heater 44 for the consolidation step 504, no additional heater(s) (e.g., outside of the composite preform 56) are needed for forming the aircraft component 22. This may significantly reduce an initial setup cost for producing the aircraft components 22. Furthermore, the electric heater 44 can heat the thermoplastic material 46 with less interference (e.g., thermal resistance) than a heater external to the composite preform 56 and the tooling 58 / the vacuum bag 60.

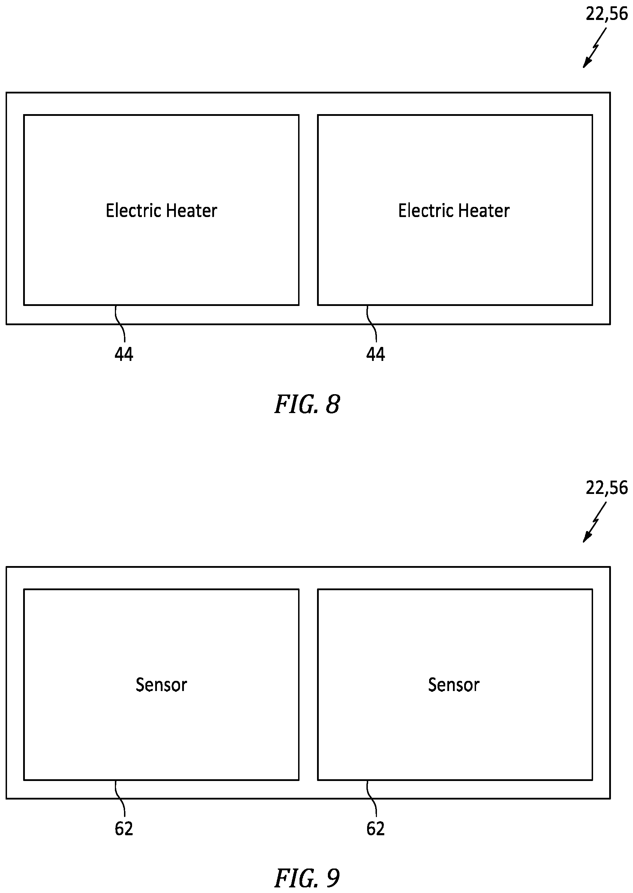

In some embodiments, referring to FIG. 8, the aircraft component 22 may include multiple of the internal electric heaters 44. These electric heaters 44 may be operated to heat the surrounding composite preform material to a common (e.g., the same) temperature during the consolidation step 504. Alternatively, the electric heaters 44 may be operated to heat the surrounding composite preform material to different temperatures during the consolidation step 504. The heating during the consolidation step 504 may thereby be tailored to dimensional differences, etc. in the composite preform 56.

According to the invention, referring to FIG. 9, the consolidation of the composite preform 56 may be monitored using a sensor system with one or more sensors 62. One or more or all of these sensors 62 are arranged within the composite preform 56. The sensors 62 are thereby embedded within the cured thermoset material of the aircraft component 22. These sensors 62 may also or alternatively be used to monitor the thermal anti-icing, the aircraft component 22 and/or an environment surrounding the aircraft component 22 during aircraft operation. Examples of the sensors 62 include, but are not limited to, temperature sensors and pressure sensors.

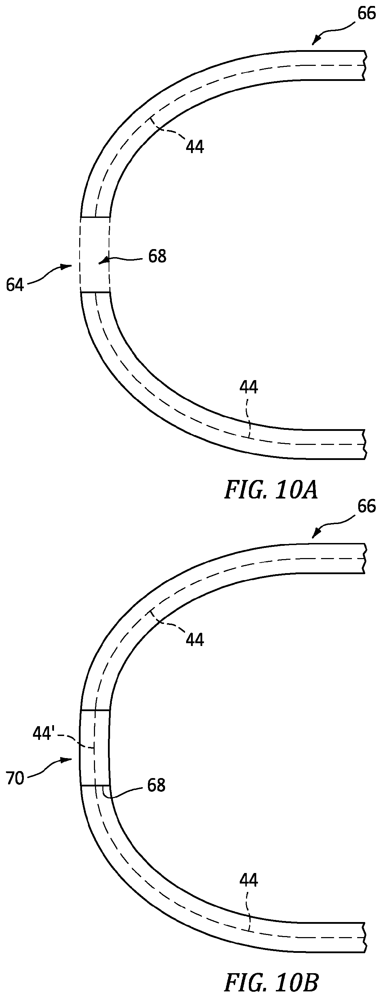

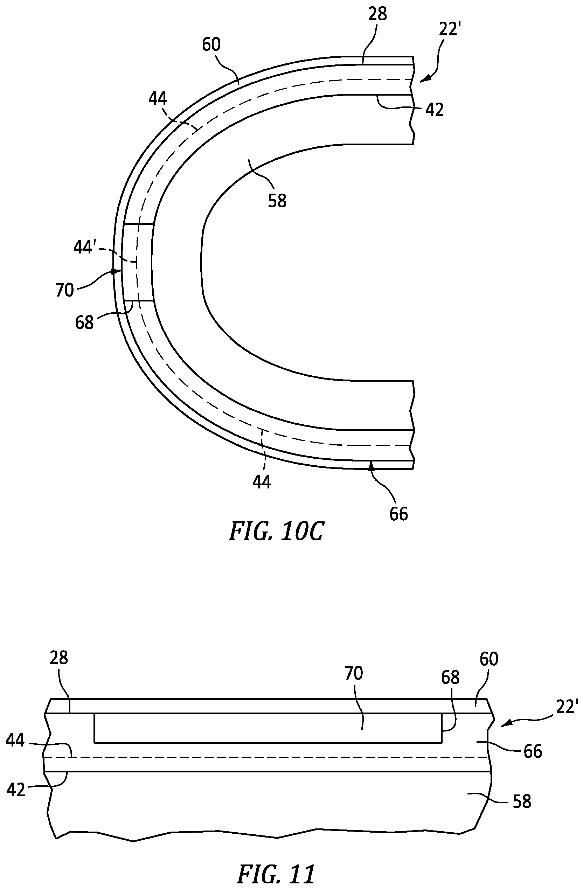

While the electric heater(s) 44 are described above for forming the aircraft component 22, the electric heater(s) 44 may also or alternatively be used for repairing the aircraft component 22. For example, referring to FIG. 10A, a damaged portion 64 of the aircraft component 22 may be removed to provide a base member 66 of a future repaired composite aircraft component 22' (see FIG. 10C). This base member 66 includes a void 68 (e.g., a hole, a groove, a notch, a recession, a depression, etc.) at a location of where the damaged portion 64 was removed. Referring to FIG. 10B, a repair member 70 is arranged with the base member 66 to fill, cover and/or otherwise patch the void 68. This repair member 70 may have a similar configuration / makeup as the composite preform 56 described above. The repair member 70 of FIG. 10B, for example, includes fiber-reinforcement and thermoplastic material (e.g., similar to that shown in FIGS. 3A-C); e.g., one or more layers of thermoplastic prepreg. The repair member 70 of FIG. 10B also include at least one electric heater 44' laid up with the thermoplastic prepreg layers (e.g., similar to that shown in FIGS. 3A-C). Referring to FIG. 10C, the repair member 70 may be pressed against the base member 66 using the tooling 58, the vacuum bag 60 and/or other techniques. The thermoplastic material in the repair member 70 and/or the thermoplastic material in the base member 66 may then be heated by the electric heater 44' in the repair member 70 and/or the electric heater(s) 44 in the base member 66 to bond the repair member 70 to the base member 66. The repair member 70 may thereby be consolidated with the base member 66 to form the repaired aircraft component 22'.

In some embodiments, the electric heater 44' in the repair member 70 of the repaired aircraft component 22' may be included as a part of the thermal anti-icing system 24 (see FIG. 1). Of course, in other embodiments, the repair member 70 may be configured without its own integral electric heater.

In some embodiments, the repair member 70 may be formed to fit into the void 68 as shown, for example, in FIGS. 10B and C. However, in other embodiments, the repair member 70 may alternatively overlap the base member 66 as shown, for example, in FIG. 11.

The member 66 is described above as a part of a damaged aircraft component and the member 70 is described as a repair member for patching the void 68 in the damaged aircraft component. However, it is contemplated that multiple new (e.g., non-damaged) members may be joined together using the foregoing consolidation and bonding process to form a new (e.g., non-repaired) aircraft component.

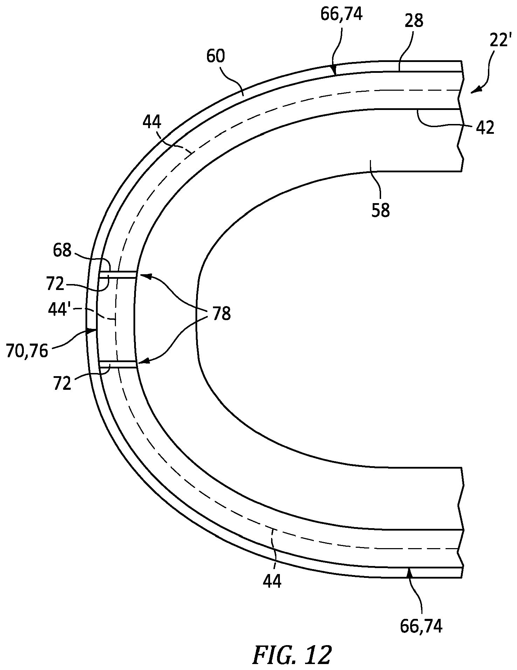

In some embodiments, referring to FIG. 12, at least one layer of thermoplastic bonding material 72 is disposed between first and second members 74 and 76 of the aircraft component 22; e.g., the component members 66 and 70. This thermoplastic bonding material 72 is heated using any one or more of the electric heaters 44, 44' to or above the consolidation temperature to bond the thermoplastic bonding material 72 to the first and the second members 74 and 76. The thermoplastic bonding material 72 may thereby bond the first and the second members 74 and 76 together at an intermember joint 78. Of course, additional heat may also be input for the bonding from an external heating source (not shown); although, preferably such an external heating source is not required.

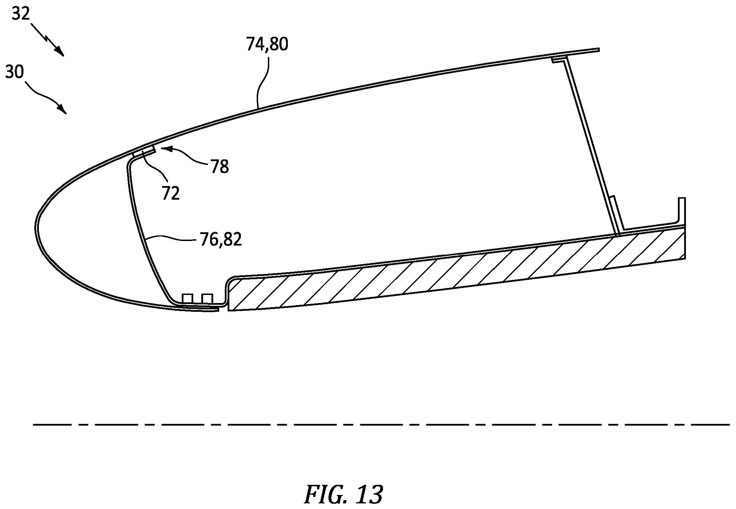

The thermoplastic bonding material 72 may be different than the thermoplastic material in the first member 74 and/or the thermoplastic material in the second member 76. The thermoplastic bonding material 72, for example, may be selected to bond to the first and the second members 74 and 76 at a temperature that is below the melting point of the first and the second thermoplastic materials and, for example, below the softening point of the first and the second thermoplastic materials. For example, the thermoplastic bonding material 72 may be polyetherimide (PEI), and the first and the second thermoplastic materials may be polyether ether ketone (PEEK). With such an arrangement, the first and the second members 74 and 76 may retain their shape, dimensions, etc. while being bonded together by the thermoplastic bonding material 72. Furthermore, the first and the second members 74 and 76 may be readily de-bonded similarly using the internal electric heater(s) 44, 44'. This may facilitate manufacture and/or repair of, for example, the nacelle inlet structure 30 of FIG. 13, where an exterior skin 80 may be the first member 74, a bulkhead 82 may be the second member 76. With such an arrangement, the exterior skin 80 may be removably attached to the bulkhead 82, for example, without any mechanical fasteners. Of course, various other aircraft components may also utilize such a construction.

While various embodiments of the present invention have been disclosed, it will be apparent to those of ordinary skill in the art that many more embodiments and implementations are possible within the scope of the invention that is defined by the appended claims. For example, the present invention as described herein includes several aspects and embodiments that include particular features.

## Claims

1. A method, comprising:
providing a preform (56) that includes an electric heater (44) and thermoplastic material (46);
consolidating the preform (56) to provide an aircraft component (22), the consolidating comprising heating the thermoplastic material (46) using the electric heater (44), the electric heater (44) embedded within the thermoplastic material (46) of the aircraft component (22), and the electric heater (44) configured as a part of a thermal anti-icing system (24) for melting and/or preventing ice accumulation on an exterior surface (28) of the aircraft component (22); and
monitoring the consolidation of the preform (56) using a sensor (62), the sensor (62) embedded within the thermoplastic material (460 of the aircraft component (22).

2. The method of claim 1, wherein
the preform (56) further includes fiber-reinforcement (45); and
the fiber-reinforcement (45) is embedded within the thermoplastic material (46) of the aircraft component (22).

3. The method of claim 1 or 2, further comprising conforming the preform (56) to tooling (58) by heating the thermoplastic material (46) using the electric heater (44).

4. The method of any preceding claim, wherein the consolidation further comprises applying pressure to the preform (56).

5. The method of any preceding claim, wherein
the providing of the preform (56) comprises laying up the electric heater (44) between a first layer and a second layer;
the first layer includes a first portion of the thermoplastic material (46); and
the second layer includes a second portion of the thermoplastic material (46).

6. The method of any preceding claim, wherein the electric heater (44) comprises a plurality of electric heating elements (50) embedded within the thermoplastic material (46) of the aircraft component (22).

7. The method of claim 6, wherein the electric heating elements (50) are arranged in a grid and/or an array.

8. The method of any preceding claim, wherein the electric heater (44) comprises a carbon nanotube heater embedded within the thermoplastic material (46) of the aircraft component (22).

9. The method of any preceding claim, wherein
the preform further includes a second electric heater (44);
the second electric heater (44) is embedded within the thermoplastic material (46) of the aircraft component (22); and
the second electric heater (44) is configured as a second part of the thermal anti-icing system (24) for melting and/or preventing ice accumulation on the exterior surface (28) of the aircraft component (22).

10. The method of claim 9, wherein
the electric heater (44) heats up to a first temperature during the heating of the thermoplastic material (46); and
the second electric heater (44) heats up to a second temperature during the heating of the thermoplastic material (46) that is different than the first temperature.

11. The method of claim 9, wherein the electric heater (44) and the second electric heater (44) heat up to a common temperature during the heating of the thermoplastic material (46).

12. The method of any preceding claim, wherein a nacelle inlet structure (30) comprises the aircraft component (22).

13. The method of any of claims 1 to 11, wherein an airfoil (34; 36; 38) comprises the aircraft component (32).

14. The method of any preceding claim, wherein the sensor (62) is configured to monitor the thermal anti-icing system (24) for melting and/or preventing ice accumulation on an or the exterior surface (28) of the aircraft component (22) after consolidation of the preform (56).

## Patentansprüche

1. Verfahren, umfassend:
Bereitstellen eines Vorformlings (56), der eine elektrische Heizung (44) und thermoplastisches Material (46) beinhaltet;
Verfestigen des Vorformlings (56), um ein Luftfahrzeugbauteil (22) bereitzustellen, wobei das Verfestigen ein Erhitzen des thermoplastischen Materials (46) unter Verwendung der elektrischen Heizung (44) umfasst, wobei die elektrische Heizung (44) innerhalb des thermoplastischen Materials (46) des Luftfahrzeugbauteils (22) eingebettet ist und die elektrische Heizung (44) als ein Teil eines thermischen Frostschutzsystems (24) zum Schmelzen und/oder Verhindern einer Ansammlung von Eis an einer Außenoberfläche (28) des Luftfahrzeugbauteils (22) konfiguriert ist; und
Überwachen der Verfestigung des Vorformlings (56) unter Verwendung eines Sensors (62), wobei der Sensor (62) innerhalb des thermoplastischen Materials (460) des Luftfahrzeugbauteils (22) eingebettet ist.

2. Verfahren nach Anspruch 1, wobei
der Vorformling (56) ferner eine Faserverstärkung (45) beinhaltet; und
die Faserverstärkung (45) innerhalb des thermoplastischen Materials (46) des Luftfahrzeugbauteils (22) eingebettet ist.

3. Verfahren nach Anspruch 1 oder 2, ferner umfassend ein Anpassen des Vorformlings (56) an eine Werkzeugbestückung (58) durch Erhitzen des thermoplastischen Materials (46) unter Verwendung der elektrischen Heizung (44).

4. Verfahren nach einem der vorhergehenden Ansprüche, wobei die Verfestigung ferner ein Aufbringen von Druck auf den Vorformling (56) umfasst.

5. Verfahren nach einem der vorhergehenden Ansprüche, wobei das Bereitstellen des Vorformlings (56) ein Einlegen der elektrischen Heizung (44) zwischen einer ersten Schicht und einer zweiten Schicht umfasst;
die erste Schicht einen ersten Abschnitt des thermoplastischen Materials (46) beinhaltet; und
die zweite Schicht einen zweiten Abschnitt des thermoplastischen Materials (46) beinhaltet.

6. Verfahren nach einem der vorhergehenden Ansprüche, wobei die elektrische Heizung (44) eine Vielzahl von elektrischen Heizelementen (50) umfasst, die innerhalb des thermoplastischen Materials (46) des Luftfahrzeugbauteils (22) eingebettet sind.

7. Verfahren nach Anspruch 6, wobei die elektrischen Heizelemente (50) in einem Gitter und/oder einem Array angeordnet sind.

8. Verfahren nach einem der vorhergehenden Ansprüche, wobei die elektrische Heizung (44) eine Kohlenstoffnanoröhrenheizung umfasst, die innerhalb des thermoplastischen Materials (46) des Luftfahrzeugbauteils (22) eingebettet ist.

9. Verfahren nach einem der vorhergehenden Ansprüche, wobei der Vorformling ferner eine zweite elektrische Heizung (44) beinhaltet;
die zweite elektrische Heizung (44) innerhalb des thermoplastischen Materials (46) des Luftfahrzeugbauteils (22) eingebettet ist; und
die zweite elektrische Heizung (44) als ein zweiter Teil des thermischen Frostschutzsystems (24) zum Schmelzen und/oder Verhindern einer Ansammlung von Eis an der Außenoberfläche (28) des Luftfahrzeugbauteils (22) konfiguriert ist.

10. Verfahren nach Anspruch 9, wobei
sich die elektrische Heizung (44) während des Erhitzens des thermoplastischen Materials (46) auf eine erste Temperatur erhitzt; und
sich die zweite elektrische Heizung (44) während des Erhitzens des thermoplastischen Materials (46) auf eine zweite Temperatur erhitzt, die von der ersten Temperatur verschieden ist.

11. Verfahren nach Anspruch 9, wobei sich die elektrische Heizung (44) und die zweite elektrische Heizung (44) während des Erhitzens des thermoplastischen Materials (46) auf eine gemeinsame Temperatur erhitzen.

12. Verfahren nach einem der vorhergehenden Ansprüche, wobei eine Gondeleinlasskonstruktion (30) das Luftfahrzeugbauteil (22) umfasst.

13. Verfahren nach einem der Ansprüche 1 bis 11, wobei ein Tragflügel (34; 36; 38) das Luftfahrzeugbauteil (32) umfasst.

14. Verfahren nach einem der vorhergehenden Ansprüche, wobei der Sensor (62) dazu konfiguriert ist, das thermische Frostschutzsystem (24) zum Schmelzen und/oder Verhindern einer Ansammlung von Eis an der Außenoberfläche (28) des Luftfahrzeugbauteils (22) nach der Verfestigung des Vorformlings (56) zu überwachen.

## Revendications

1. Procédé, comprenant :
la fourniture d'une préforme (56) qui comporte un dispositif de chauffage électrique (44) et un matériau thermoplastique (46) ; la consolidation de la préforme (56) pour fournir un composant d'aéronef (22), la consolidation comprenant le chauffage du matériau thermoplastique (46) en utilisant le dispositif de chauffage électrique (44), le dispositif de chauffage électrique (44) étant intégré à l'intérieur du matériau thermoplastique (46) du composant d'aéronef (22), et le dispositif de chauffage électrique (44) étant configuré comme une partie d'un système d'antigivrage thermique (24) destiné à faire fondre et/ou à empêcher l'accumulation de glace sur une surface extérieure (28) du composant d'aéronef (22) ; et
la surveillance de la consolidation de la préforme (56) en utilisant un capteur (62), le capteur (62) étant intégré à l'intérieur du matériau thermoplastique (460 du composant d'aéronef (22) .

2. Procédé selon la revendication 1, dans lequel
la préforme (56) comporte en outre un renforcement en fibres (45) ; et
le renforcement en fibres (45) est intégré à l'intérieur du matériau thermoplastique (46) du composant d'aéronef (22).

3. Procédé selon la revendication 1 ou la revendication 2, comprenant en outre l'adaptation de la préforme (56) à un outillage (58) par chauffage du matériau thermoplastique (46) en utilisant le dispositif de chauffage électrique (44).

4. Procédé selon une quelconque revendication précédente, dans lequel la consolidation comprend en outre l'application d'une pression sur la préforme (56).

5. Procédé selon une quelconque revendication précédente, dans lequel
la fourniture de la préforme (56) comprend la mise en place du dispositif de chauffage électrique (44) entre une première couche et une seconde couche ;
la première couche comporte une première portion du matériau thermoplastique (46) ; et
la seconde couche comporte une seconde portion du matériau thermoplastique (46).

6. Procédé selon une quelconque revendication précédente, dans lequel le dispositif de chauffage électrique (44) comprend une pluralité d'éléments chauffants électriques (50) intégrés à l'intérieur du matériau thermoplastique (46) du composant d'aéronef (22).

7. Procédé selon la revendication 6, dans lequel les éléments chauffants électriques (50) sont agencés selon une grille et/ou un réseau.

8. Procédé selon une quelconque revendication précédente, dans lequel le dispositif de chauffage électrique (44) comprend un dispositif de chauffage à nanotubes de carbone intégré à l'intérieur du matériau thermoplastique (46) du composant d'aéronef (22).

9. Procédé selon une quelconque revendication précédente, dans lequel
la préforme comporte en outre un second dispositif de chauffage électrique (44) ;
le second dispositif de chauffage électrique (44) est intégré à l'intérieur du matériau thermoplastique (46) du composant d'aéronef (22) ; et
le second dispositif de chauffage électrique (44) est configuré comme une seconde partie du système d'antigivrage thermique (24) destiné à faire fondre et/ou à empêcher l'accumulation de glace sur la surface extérieure (28) du composant d'aéronef (22).

10. Procédé selon la revendication 9, dans lequel
le dispositif de chauffage électrique (44) chauffe jusqu'à une première température pendant le chauffage du matériau thermoplastique (46) ; et
le second dispositif de chauffage électrique (44) chauffe jusqu'à une seconde température pendant le chauffage du matériau thermoplastique (46) qui est différente de la première température.

11. Procédé selon la revendication 9, dans lequel le dispositif de chauffage électrique (44) et le second dispositif de chauffage électrique (44) chauffent jusqu'à une température commune pendant le chauffage du matériau thermoplastique (46).

12. Procédé selon une quelconque revendication précédente, dans lequel une structure d'entrée de nacelle (30) comprend le composant d'aéronef (22).

13. Procédé selon l'une quelconque des revendications 1 à 11, dans lequel un profil aérodynamique (34 ; 36 ; 38) comprend le composant d'aéronef (32).

14. Procédé selon une quelconque revendication précédente, dans lequel le capteur (62) est configuré pour surveiller le système d'antigivrage thermique (24) pour faire fondre et/ou empêcher l'accumulation de glace sur une ou la surface extérieure (28) du composant d'aéronef (22) après consolidation de la préforme (56).
